Europäisches Patentamt

European Patent Office

Office européen des brevets

(11) Veröffentlichungsnummer: **0 388 729 A2**

# (12) EUROPÄISCHE PATENTANMELDUNG

(21) Anmeldenummer: **90104491.7**

(22) Anmeldetag: **09.03.90**

(51) Int. Cl.5: **G05B 19/405**

(30) Priorität: **23.03.89 DE 3909635**

(43) Veröffentlichungstag der Anmeldung:
**26.09.90 Patentblatt 90/39**

(84) Benannte Vertragsstaaten:
**AT DE FR GB IT NL SE**

(71) Anmelder: **Oxytechnik Ges. für Systemtechnik mbH**
**Frankfurter Strasse 10**
**D-6236 Eschborn 1(DE)**

(72) Erfinder: **Lehmler, Hans Friedrich**
**Ricarda-Huch-Strasse 40**
**D-6380 Bad Homburg(DE)**
Erfinder: **Halbauer, Klaus, Dr.**
**Kastanienweg 4**
**D-6072 Dreieich-Buchschlag(DE)**

(74) Vertreter: **Roesner, Werner**
**MESSER GRIESHEIM GmbH Patentabteilung**
**Lärchenstrasse 137 Postfach 83 00 48**
**D-6230 Frankfurt/Main 83(DE)**

(54) Verfahren zum Aktivieren einer zum Ausheben von geschnittenen Teilen aus einem Blechrahmen eingesetzten ansteuerbaren Greifertraverse.

(57) Der Einsatz von numerisch gesteuerten Schneidmaschinen eröffnet die Möglichkeit, Geometriedaten von Einzelteilen in einer Bauteilbibliothek zwischenzuspeichern und entsprechend den jeweiligen Marktanforderungen die verschiedenen, abgelegten Einzelteile in einer Blechplatte jeweils unterschiedlich zu verschachteln. Damit für die jeweils neu verschachtelten Einzelteile (1) nicht jeweils ein neues Steuerprogramm zum Ausheben dieser Einzelteile aus dem Blechrahmen erstellt werden muß, werden zu der Geometrie jedes Einzelteiles (1) auch die jedem Einzelteil zugeordneten Lagedaten der Greifertraverse (3) in eine Steuerung eingegeben, wobei die Greifertraverse von der Steuerung mittels der verfügbaren Greifertraverse-Lagedaten relativ zu den Einzelteilen (1) automatisch positioniert wird.

VERFAHRENSSCHEMA

## Verfahren zum Aktivieren einer zum Ausheben von geschnittenen Teilen aus einem Blechrahmen eingesetzten ansteuerbaren Greifertraverse

Die Erfindung betrifft ein Verfahren zum Aktivieren einer zum Ausheben von geschnittenen Teilen aus einem Blechrahmen eingesetzten ansteuerbaren Greifertraverse und eine Greifertraverse mit Greifern sowie eine Steuerung mit einem Bildschirm und Steuerelementen.

In der industriellen Fertigung haben sich CNC-gesteuerte Brennschneidmaschinen heute allgemein durchgesetzt. Ausschlaggebend für diesen Erfolg sind vor allem die wirtschaftlichen Vorteile, die diese Maschinen gegenüber den optisch gesteuerten Maschinen bieten. So werden die Nebenzeiten drastisch reduziert, was eine Verbesserung der Nutzungsrate von etwa 30 % auf bis zu 75% je nach Anwendungsfall mit sich bringt. Weitere wichtige Vorteile sind der geringere Platzbedarf der Maschine durch den Wegfall der optischen Abtasteinrichtung sowie die Möglichkeit, komplett optimierte Schachtelpläne in die Steuerung einzugeben und damit den Verschnitt erheblich zu reduzieren. Dabei werden häufig wiederkehrende Teile in Form einer Bauteilbibliothek zwischengespeichert und in Abhängigkeit von ihrer Zusammenstellung jeweils unterschiedlich (chaotisch) verschachtelt. Nach dem Schneiden muß eine Greifertraverse mit Magnet- oder Vakuumgreifern oder ähnlichen Mitteln über die jeweils neu - entsprechend dem aktuellen Schachtelplan - auf dem Rohblech platzsparend verlegten Teile positioniert werden.

Es ist bekannt, eine Greifertraverse mit visueller Steuerung durch einen Bediener über den geschnittenen Teilen zu positionieren. Die Bewegung der Greifertraverse wird über einen joy-stick gesteuert.

Bei größeren Arbeitsbreiten und bis zu 20 Schneidbrennern sind bei der visuellen Steuerung der Greifertraverse zu den vom Steuerplatz entfernten Teilen in der Praxis oftmals mehrere aufeinanderfolgende Positionierversuche erforderlich. Es muß hierbei ein auf dem heißen Schrottrahmen stehender zweiter Bediener dem an der Steuerung eingesetzten Richtungsanweisungen geben. Eine derartige Steuerung ist zeit- und kostenintensiv, was die Nebenzeiten erhöht und eine Verschlechterung der Nutzungsrate der Brennschneidmaschine mit sich bringt.

Beim Abwracken großer Schiffe und dergleichen sind kostenintensive Greifertraversen mit Elektromagneten zum Halten und Fördern der Metallteile im Einsatz (US-A-4139180) . Die Steuerung jeder Greifertraverse erfolgt durch einen Bedienungsmann von einer verfahrbaren Gondel aus.

Mittels einer programmierten Steuerung werden gemäß EP 0056143B1 eine Mehrzahl kleiner Einzelstücke aus einem Blechrahmen ausgehoben und zu einer Sammelstelle gefördert. Entsprechend dem Programm besteht die Möglichkeit, die Magnetbaugruppen selektiv zu betätigen. Dabei muß nach dem jeweils neuen Verschachteln der Teile die Steuerung entsprechend dem aktuellen Schachtelplan programmiert werden.

Der Erfindung liegt daher die Aufgabe zugrunde, ein Verfahren zu schaffen, mit dem nach dem Schnitt von geschachtelten Teilen diese ohne Erstellen eines neuen Steuerprogrammes automatisch aus dem Blechrahmen ausgehoben werden können.

Diese Aufgabe wird erfindungsgemäß dadurch gelöst, daß zu der Geometrie jedes Einzelteiles auch die jedem Einzelteil zugeordneten Lagedaten der Greifertraverse in eine Steuerung eingegeben werden und die Greifertraverse von der Steuerung mittels der verfügbaren Greifertraverse-Lagedaten relativ zu den Einzelteilen automatisch positioniert wird.

Durch die Erfindung werden die Nebenzeiten beim Ausheben von geschnittenen Teilen verringert, weil die genaue Lage der Greifertraverse und der Greifer jedem zu verschachtelnden Einzelteil zugeordnet ist, so daß bei dessen Verschachteln in einer Blechplatte die Lagedaten zur Steuerung der Greifertraverse und der Greifer mit verschoben werden. Dabei wird der Nachteil der jeweils neuen Bestimmung und Eingabe der Lagedaten der Greifertraverse und der Greifer bei jeweils gleichen, jedoch unterschiedlich verschachtelten Teilen vermieden. Bei symmetrisch aufgebauten Greifertraversen kann durch Eingabe der Mittelpunktskoordinate und mindestens einer von einer durch den Mittelpunkt verlaufenden Waagrechten ausgehenden Winkelkoordinate die Greifertraverse von der Steuerung direkt angesteuert werden. Durch die im Anspruch 3 genannten Merkmale können vorteilhaft die Greifer auf der Greifertraverse positioniert werden. Hierzu können wahlweise zwei oder mehr Greifer über Führungen auf der Greifertraverse bewegt werden oder es können auf der Greifertraverse mehrere Greifer nebeneinander angeordnet und jeweils in Abhängigkeit von der Einzelteilgeometrie aktiviert werden.

Neben dem Aushebevorgang der geschnittenen Teile können vorteilhaft auch der Ablade-, Sortier- und Stapel-Vorgang automatisiert werden, wenn der Greifertraverse mit den Greifern die Lagedaten eines Abladeplatzes vorgegeben werden. Dabei setzt die Greifertraverse die Teile jeweils übereinander und findet die richtige Auflegehöhe durch einen oder mehrere in die Greifertraverse oder dem Ablegeplatz eingebaute Sensoren, die nach Aufsetzen der Teile die Abwärtsbewegung der Greifertraverse stoppen.

Die Lagedaten für die Steuerung der Greifertraverse und die Information darüber, welche Greifer später zum Heben aktiviert werden, werden auf einem Bildschirm durch übereinanderlegen der Bauteilkontur und mindestens der Mittelachse und/oder der Kontur der Greifertraverse mit den Greifern ermittelt, wobei die zu benutzenden Greifer innerhalb der Kontur angeordnet werden. Anschließend werden die so gewonnenen Lagedaten mittels eines Eingabeelementes in die Steuerung eingegeben und abgelegt. Die Steuerung weist hierzu einen Bildschirm auf, auf dem die Kontur und/oder die Mittelachse der Greifertraverse mit den Greifern in dem Maßstab der Kontur der Einzelteile dargestellt werden kann. Mit mindestens einem Steuerelement kann die Greifertraverse auf dem Bildschirm in ihrer Lage verschoben werden, wobei der Abstand der Greifer auf der Greifertraverse einstellbar ist. Mit der Steuerung ist eine Greifertraverse verbunden, entlang der die Greifer automatisch verstellbar und aktivierbar sind. Die Greifertraverse ist vorteilhaft um ihren Mittelpunkt drehbar.

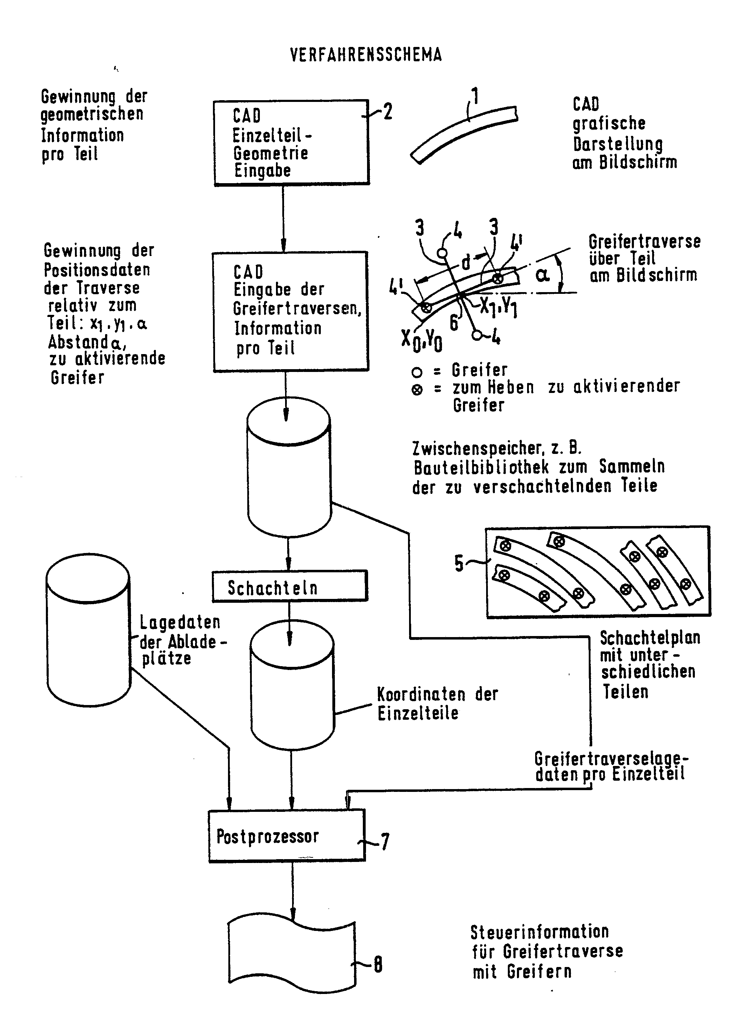

Ein Ausführungsbeispiel der Erfindung ist in der Zeichnung dargestellt und wird im folgenden näher beschrieben.

Bei dem in der Zeichnung dargestellten Verfahrensschema werden die Konturen der Einzelteile beispielsweise an einem CAD-Bildschirm erzeugt. Jede eingegebene Kontur des Einzelteils 1 wird auf dem Bildschirm 2 graphisch dargestellt. Anschließend kann die Greifertraverse 3 mit den Greifern 4 als Konturelement entsprechend dem vorgewählten Maßstab des Einzelteiles auf dem Bildschirm graphisch dargestellt und auf diesem über ein Steuerelement verschoben werden. Das Verschieben kann dabei manuell oder automatisch über ein Programm mittels Steuersignalen erfolgen. Die Kontur der Greifertraverse mit den Greifern und/oder mindestens die Mittelachse der Greifertraverse mit den Greifern wird innerhalb der Kontur des Einzelteiles so angeordnet, daß das Einzelteil beim Ausheben aus dem Blechrahmen 5 nahezu im Gleichgewicht gehalten wird. Hierzu können in Abhängigkeit von der Geometrie der Einzelteile ein oder mehrere Greifer innerhalb der Kontur der Einzelteile angeordnet werden. Als Lagedaten für die Greifertraverse und die Greifer werden die Mittelpunktskoordinate $x_1 y_1$, mindestens eine von einer durch den Mittelpunkt 6 der Greifertraverse verlaufenden Waagrechten ausgehende Winkelkoordinate der Greifertraverse und der Abstand d der an der Greifertraverse angeordneten Greifer und/oder die zu aktivierenden Greifer $4'$, wenn mehrere neben- oder hintereinander angeordnet sind, in den Rechner einer Steuerung eingegeben. Die Geometriedaten der Einzelteile sowie die jedem Einzelteil zugeordneten Lagedaten der Greifertraverse mit den Greifern können in einem Zwischenspeicher, z. B. einer Bauteilbibliothek gesammelt werden. Zur Fertigung werden die Einzelteile mit den ihnen zugeordneten Lagedaten der Greifertraverse mit den Greifern manuell an dem Bildschirm oder über ein Steuerprogramm automatisch in einer Blechplatte verschachtelt. Die Einzelteile können hierbei eine unterschiedliche Geometrie aufweisen. Mit dem Verschachteln der Einzelteile werden auch die Greifertraverse-Lagedaten verschoben und stehen damit an der aktuellen Postion des Einzelteiles zur Verfügung.

Die Koordinaten der Einzelteile und die Greifertraverse-Lagedaten pro Einzelteil werden über einen Postprozessor in eine Steuerung eingegeben, mittels der die Greifertraverse relativ zu den Einzelteilen automatisch positioniert wird. Die Steuerung stellt hierzu die Greifer entlang der Greifertraverse auf den vorgegebenen Abstand ein, während die Greifertraverse entsprechend der vorgegebenen Winkelkoordinate um ihren Mittelpunkt gedreht wird. Nach einem weiteren vorteilhaften Ausführungsbeispiel werden über den Postprozessor der Steuerung die Lagedaten (Koordinaten) von Abladeplätzen eingegeben, mittels denen die Greifertraverse mit den Greifern und daran angeordneten geschnittenen Teilen automatisch zu den Abladeplätzen gefahren werden und an denen die Greifertraverse mit den geschnittenen Teilen abwärtsbewegt wird. Die Abwärtsbewegung wird nach dem Aufsetzen der Teile über der Greifertraverse oder den Abladeplätzen zugeordnete Sensoren gestoppt.

## Ansprüche

1. Verfahren zum Aktivieren einer zum Ausheben von geschnittenen Teilen aus einem Blechrahmen eingesetzten ansteuerbaren Greifertraverse, bei dem die Teile über Geometriedaten, die in einer Steuerung abgelegt sind, geschnitten werden, dadurch gekennzeichnet, daß zu der Geometrie jedes Einzelteiles (1) auch die jedem Einzelteil zugeordneten Lagedaten der Greifertraverse (3) in eine Steuerung eingegeben werden und die Greifertraverse (3) von der Steuerung mittels der verfügbaren Greifertraverse-Lagedaten relativ zu den Einzelteilen (1) automatisch positioniert wird.

2. Verfahren nach Anspruch 1, dadurch gekennzeichnet, daß in der Steuerung die Mittelpunktskoordinate ($x_1,y_1$) und mindestens eine von der durch den Mittelpunkt (6) verlaufenden Waagrechten ausgehende Winkelkoordinate der Greifertraverse (3) abgelegt werden.

3. Verfahren nach Anspruch 1 oder 2, dadurch gekennzeichnet, daß der Abstand (d) der an der Greifertraverse (3) angeordneten Greifer (4, 4') und/oder die zu aktivierenden Greifer (4') in der Steuerung abgelegt werden.

4. Verfahren nach einem der Ansprüche 1 bis 3, dadurch gekennzeichnet, daß in der Steuerung die Lagedaten von Abladeplätzen für geschnittene Teile (1) abgelegt werden, mittels denen die Teile automatisch zu dem Abladeplatz gefahren werden und and denen die Greifertraverse (3) mit den geschnittenen Teilen abwärtsbewegt wird, wobei die Abwärtsbewegung nach dem Aufsetzen der Teile (1) über der Greifertraverse (3) oder den Abladeplätzen zugeordnete Sensoren gestoppt wird.

5. Verfahren nach einem der Ansprüche 1 bis 4, dadurch gekennzeichnet, daß die Lagedaten für die Steuerung der Greifertraverse (3) und der Greifer (4, 4') durch Übereinanderlegen der Einzelteilkontur (1) und mindestens der Mittelachse und/oder der Kontur der Greifertraverse (3) mit den Greifern (4, 4') auf einem Bildschirm ermittelt werden, wobei die Greifer (4') innerhalb der Kontur angeordnet werden.

6. Greifertraverse mit Greifern, dadurch gekennzeichnet, daß die Greifertraverse (3) und die Greifer (4, 4') mit einer Steuerung verbunden sind und die Greifer (4, 4') entlang der Greifertraverse (3) verstellbar sind und die Greifertraverse vorzugsweise um ihren Mittelpunkt (6) drehbar ist.

7. Steuerung mit einem Bildschirm (2) und Steuer- und/oder Eingabeelementen, dadurch gekennzeichnet, daß auf dem Bildschirm die Kontur und/oder die Mittelachse der Greifertraverse (3) mit den Greifern (4,4') in dem Maßstab der Kontur der Einzelteile (1) dargestellt und mit mindestens einem Steuerelement die Greifertraverse (3) auf dem Bildschirm (2) in ihrer Lage verschoben werden kann, wobei der Abstand (d) der Greifer (4, 4') auf der Greifertraverse (3) einstellbar ist.

## VERFAHRENSSCHEMA

Gewinnung der
geometrischen
Information
pro Teil

CAD
Einzelteil-
Geometrie
Eingabe — 2

1

CAD
grafische
Darstellung
am Bildschirm

Gewinnung der
Positionsdaten
der Traverse
relativ zum
Teil: $x_1, y_1, \alpha$
Abstand $\alpha$,
zu aktivierende
Greifer

CAD
Eingabe der
Greifertraversen,
Information
pro Teil

Greifertraverse
über Teil
am Bildschirm

$X_1, Y_1$   $X_0, Y_0$   $\alpha$   $d$

O = Greifer
⊗ = zum Heben zu aktivierender
Greifer

Zwischenspeicher, z. B.
Bauteilbibliothek zum Sammeln
der zu verschachtelnden Teile

Schachteln

5

Lagedaten
der Abladeplätze

Koordinaten der
Einzelteile

Schachtelplan
mit unterschiedlichen
Teilen

Greifertraverselagedaten pro Einzelteil

Postprozessor — 7

Steuerinformation
für Greifertraverse
mit Greifern — 8